# FASCICULE DE BREVET EUROPEEN

(11) **EP 2 865 044 B1**
(45) Date de publication et mention de la délivrance du brevet: **02.11.2016**
(21) Numéro de dépôt: 13730004.2
(22) Date de dépôt: 29.05.2013
(51) Int. Cl.: H01M 10/615, H01M 10/637, H01M 10/42, H01M 10/48, H01M 10/625

(54) **DISPOSITIF DE RÉCHAUFFEMENT D'UNE BATTERIE D'ACCUMULATEURS D'UN VÉHICULE AUTOMOBILE ET PROCEDÉ DE RÉCHAUFFEMENT CORRESPONDANT**
VORRICHTUNG ZUM ERWÄRMEN EINER SPEICHERBATTERIE EINES KRAFTFAHRZEUGES UND ENTSPRECHENDES VERFAHREN
DEVICE FOR HEATING A STORAGE BATTERY OF A MOTOR VEHICLE AND CORRESPONDING HEATING METHOD

(30) Priorité: 22.06.2012 FR 1201776
(43) Date de publication de la demande: 29.04.2015
(73) Titulaire: Renault S.A.S., 92100 Boulogne-Billancourt (FR)
(72) Inventeur: STAUNER, Daniel, F-91510 Lardy (FR)
(86) Numéro de dépôt international: PCT/FR2013/051203
(87) Numéro de publication internationale: WO 2013/190199

(56) Documents cités:
- EP-A1- 2 413 454
- EP-A2- 1 026 769
- WO-A1-2012/014392
- CN-A- 102 074 752
- JP-A- 2007 166 779
- JP-A- 2009 142 069
- US-A- 5 990 661
- US-A- 6 072 301
- US-A1- 2010 225 278
- US-A1- 2011 298 427
- US-A1- 2011 309 070
- US-A1- 2012 153 877
- US-B1- 6 307 350
- DATABASE WPI Week 197820 Thomson Scientific, London, GB; AN 1978-D9066A XP002695364, MAZNEV A S; POZNYAK V I: -& SU 560 279 A1 (LENGD RAIL TRANSPT) 30 mai 1977 (1977-05-30)

## Description

La présente invention concerne de manière générale le réchauffement d'une batterie d'accumulateurs.

Elle concerne plus particulièrement un dispositif de réchauffement d'une batterie d'accumulateurs, à l'aide d'un circuit d'extraction qui comporte un premier composant électronique.

La présente invention concerne également un véhicule automobile comportant une batterie d'accumulateurs et un dispositif de réchauffement tel que précité.

La présente invention concerne en outre un procédé de pilotage d'un tel dispositif de réchauffement.

### ARRIERE-PLAN TECHNOLOGIQUE

Les batteries d'accumulateurs sont connues pour être sensibles à la température. Elles présentent notamment des caractéristiques dégradées lorsque leurs températures internes sont inférieures à une température de fonctionnement optimal.

Ainsi, à basse température, lorsqu'une batterie d'accumulateurs est sollicitée par un démarreur électrique pour démarrer un moteur d'un véhicule automobile, le démarrage du moteur s'effectue également dans des conditions dégradées. En effet, la vitesse de rotation du vilebrequin du moteur n'est pas optimale, entrainant ainsi de mauvaises compressions et combustions des gaz.

Il s'avère donc nécessaire, lorsque la température ambiante est réduite, de réchauffer la batterie d'accumulateurs avant de démarrer le moteur.

Il est connu pour cela de placer des éléments dissipatifs de chaleur, par exemple des résistances, à proximité de la batterie d'accumulateurs.

Il est également connu du document US6271648 une méthode de réchauffement d'une batterie d'accumulateurs, selon laquelle avant le démarrage du moteur, le démarreur électrique est piloté pour faire pivoter le vilebrequin du moteur dans un sens puis dans l'autre, avec une amplitude réduite.
Un courant électrique peu élevé est ainsi extrait de la batterie d'accumulateurs, ce qui permet de réchauffer progressivement cette dernière.

Plus précisément, la batterie d'accumulateurs et le démarreur électrique, qui présentent tous deux des résistances internes, jouent alors le rôle des résistances précitées.

L'inconvénient majeur de ce procédé est qu'il nécessite une quantité importante d'énergie électrique à dissiper par la résistance interne du démarreur électrique. Cette énergie électrique dissipée par la résistance interne du démarreur électrique est alors perdue et n'est ainsi plus utilisable pour le démarrage proprement dit du moteur.

Le document US2012/0280660 qui correspond au passage en phase nationale de la demande internationale de brevet PCT/JP2011/003958, divulgue un circuit de réchauffage de batterie avec un onduleur pour alimenter un moteur alternatif à partir d'une tension continue fournie par la batterie. L'état passant de deux transistors de l'onduleur fait circuler dans la batterie et dans une inductance du moteur, un courant qui provoque une surtension dans un condensateur par blocage de l'un des deux transistors de l'onduleur. La surtension rend passant un transistor périphérique de façon à décharger l'accumulateur dans la batterie. Ainsi les courants de charge et de décharge du condensateur chauffent la batterie sans pertes extérieures. Le circuit divulgué nécessite de correctement synchroniser les commandes de blocage des transistors en fonctions des caractéristiques physiques de l'inductance et du condensateur.

Le document US6072301 divulgue un circuit résonnant comprenant une inductance et un condensateur mis en série aux bornes d'une batterie. Le circuit est mis en service et hors service au moyen d'un thyristor. Le chauffage de la batterie est commandé par un circuit de commutation comprenant un transistor commandé de façon à entretenir dans le circuit résonnant, un courant alternatif qui traverse la batterie. Le circuit divulgué nécessite de correctement synchroniser la commande du transistor sur ou sur un multiple de la fréquence de résonnance qui est fonction des caractéristiques physiques de l'inductance et du condensateur.

Le document US6072301 divulgue un système pour augmenter une température de batterie en fermant et coupant alternativement un premier transistor qui fait passer un courant de la batterie vers une inductance de façon à augmenter la charge d'un condensateur puis en fermant et coupant alternativement un deuxième transistor qui fait passer un courant de l'inductance vers la batterie de façon à décharger le condensateur. Le circuit divulgué nécessite de correctement moduler la commande des transistors de façon à ne pas mettre la batterie ni en surcharge ni en sous-charge en fonction des caractéristiques physiques de la batterie, de l'inductance et du condensateur.

Le document EP1026769A2 divulgue différents circuits d'un dispositif pour réactiver une batterie en générant une alternance de courant dans la batterie par fermeture et ouverture d'un ou plusieurs commutateurs couplant la batterie à un condensateur et/ou une inductance. Chaque circuit divulgué nécessite de correctement commander l'ouverture de chaque interrupteur à une fréquence d'impulsion qui est fonction des caractéristiques physiques de la batterie, de l'inductance et du condensateur.

L'inconvénient de ces autres procédés connus est leur sensibilité aux dérives possibles de température et de vieillissement.

### OBJET DE L'INVENTION

Afin de remédier à l'inconvénient précité de l'état de la technique, la présente invention propose un dispositif de réchauffement moins consommateur d'énergie électrique.

Elle propose plus particulièrement, un dispositif de réchauffement d'une batterie d'accumulateurs comprenant :
- un circuit d'extraction qui comporte un premier composant électronique,
- un circuit de restitution qui est au moins en partie distinct dudit circuit d'extraction et qui comporte un second composant électronique distinct ou confondu avec ledit premier composant électronique,
- des moyens de sélection comprenant au moins un thyristor pour connecter l'un ou l'autre des circuits d'extraction et de restitution à une même borne de la batterie d'accumulateurs, et
- une unité de pilotage des moyens de sélection adaptés à connecter le circuit d'extraction à ladite borne de manière que ledit premier composant électronique extrait une quantité d'énergie électrique de la batterie d'accumulateurs, puis le circuit de restitution à ladite borne de manière que ledit second composant électronique restitue à ladite batterie d'accumulateurs une partie de ladite quantité d'énergie électrique.

Le dispositif est remarquable en ce que le premier composant électronique est un condensateur et le second composant électronique est une bobine, de sorte que le circuit intermédiaire forme préférablement un circuit LC parallèle.

Ainsi, grâce à l'invention, la quantité d'énergie électrique extraite de la batterie d'accumulateurs par le premier composant électronique est en partie restituée à la batterie d'accumulateurs par le second composant électronique.

Plus précisément, c'est essentiellement la résistance interne de la batterie d'accumulateurs qui génère une déperdition d'énergie avec un rendement optimal pour la réchauffer.

De cette manière, un maximum d'énergie est conservé dans la batterie d'accumulateurs pour le démarrage proprement dit du moteur du véhicule automobile.

D'autres caractéristiques non limitatives et avantageuses du dispositif de réchauffement conforme à l'invention sont les suivantes :
- il est prévu un circuit intermédiaire qui comporte lesdits premier et second composants électroniques,
- dans lequel les moyens de sélection sont adaptés à fermer ou à ouvrir ledit circuit intermédiaire, et
- dans lequel ladite unité de pilotage est adaptée à fermer ledit circuit intermédiaire pour transférer une partie de ladite quantité d'énergie électrique depuis le premier composant électronique jusqu'au second composant électronique ;

L'invention propose également un véhicule automobile comportant une batterie d'accumulateurs, et un dispositif de réchauffement conforme à l'invention, dont les circuits d'extraction et de restitution sont adaptés à être connectés à une même borne de la batterie d'accumulateurs par les moyens de sélection.

L'invention propose en outre, un procédé de pilotage des moyens de sélection d'un dispositif de réchauffement conforme à l'invention, comportant une étape initiale de connexion du circuit d'extraction à la borne de la batterie d'accumulateurs, puis une étape finale de connexion du circuit de restitution à ladite borne.

D'autres caractéristiques non limitatives et avantageuses du procédé de pilotage conforme à l'invention sont les suivantes :
- les étapes initiale et finale sont répétées jusqu'à ce que la température de la batterie d'accumulateurs atteigne une température déterminée ; et
- il est prévu, entre lesdites étapes initiale et finale, une étape intermédiaire au cours de laquelle ledit circuit intermédiaire est fermé.

### DESCRIPTION DETAILLEE D'UN EXEMPLE DE REALISATION

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 représente un schéma électrique d'un premier mode de réalisation d'un dispositif de réchauffement d'une batterie d'accumulateurs conforme à l'invention ;
- la figure 2 est une vue homologue à la figure 1, dans lequel seul le circuit d'extraction du dispositif de réchauffement est représenté en traits pleins ;
- la figure 3 est une vue homologue à la figure 1, dans lequel seul le circuit intermédiaire du dispositif de réchauffement est représenté en traits pleins ;
- la figure 4 est une vue homologue à la figure 1, dans lequel seul le circuit de restitution du dispositif de réchauffement est représenté en traits pleins ;
- la figure 5 représente un schéma électrique d'un deuxième mode de réalisation d'un dispositif de réchauffement ;
- la figure 6 représente un schéma électrique d'un troisième mode de réalisation d'un dispositif de réchauffement; et
- la figure 7 représente un schéma électrique d'un quatrième mode de réalisation d'un dispositif de réchauffement.

En préliminaire, on notera que d'une figure à l'autre, les éléments identiques des différents modes de réalisation, faisant ou ne faisant pas partie de l'invention maintenant revendiquée seront, dans la mesure du possible, référencés par les mêmes signes de référence et ne seront pas décrits à chaque fois.

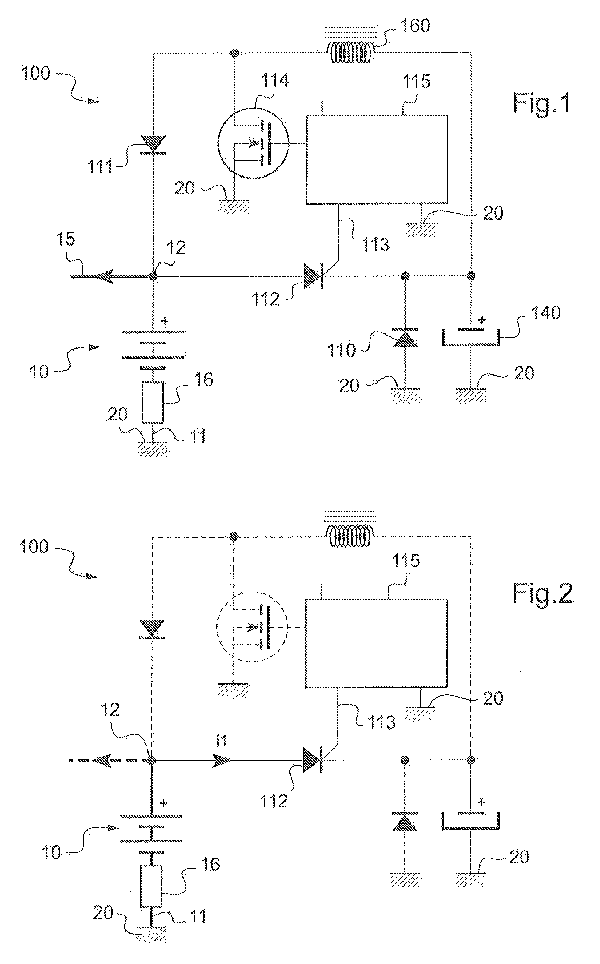

Sur les figures 1 à 7, on a représenté quatre modes de réalisation d'un dispositif de réchauffement 100 ; 200 ; 300 ; 400 d'une batterie d'accumulateurs 10 d'un véhicule automobile (non-représenté).

Cette batterie d'accumulateurs 10 est destinée à démarrer le moteur thermique de ce véhicule automobile.

Classiquement, cette batterie d'accumulateurs 10 est composée d'une pluralité de cellules d'accumulateurs en série entre deux bornes positive 12 et négative 11. A température ambiante et lorsqu'elle est chargée de manière optimale, la batterie d'accumulateurs 10 présente ici une tension nominale à ses bornes supérieure à 12 volts.

Elle présente une résistance interne, qui est schématiquement représentée sur les figures sous la forme d'une résistance 16 branchée en série avec les cellules d'accumulateurs.

La borne négative 11 de la batterie d'accumulateurs 10 est ici connectée à une masse 20 tandis que la borne positive 12 est connectée au démarreur électrique du véhicule automobile par un câble électrique 15.

On entend par « connecté » qu'une connexion électrique est prévue entre ces deux éléments électriques pour permettre à un courant électrique de circuler entre eux (ici, depuis la borne positive 12 de la batterie d'accumulateurs 10 vers le démarreur électrique).

Par la suite, on considérera que les connexions électriques seront réalisées soit par un câble électrique, soit par un conducteur électrique contenu dans une résine, soit par un conducteur électrique imprimé sur un isolant (par exemple un circuit imprimé).

Comme le montrent les figures 1 à 7, dans chaque mode de réalisation, le dispositif de réchauffement 100; 200; 300; 400 est formé par un circuit imprimé localisé à proximité de la batterie d'accumulateurs 10 du véhicule automobile.

Il est utilisé pour réchauffer la batterie d'accumulateurs 10 du véhicule automobile uniquement lorsque la température de cette batterie d'accumulateurs 10 est inférieure ou égale à une température seuil, en dessous de laquelle les performances de la batterie d'accumulateurs 10 sont dégradées.

La température de la batterie d'accumulateurs 10 est ici mesurée par une sonde de température (non-représentée) qui peut être placée dans la batterie d'accumulateurs 10 ou à proximité de celle-ci.

La température seuil est quant à elle prédéterminée. Elle dépend de la composition chimique et/ou des matériaux constituant les cellules d'accumulateurs composant la batterie d'accumulateurs 10.

Cette température seuil peut varier entre -10°C et 40°C, selon les cellules d'accumulateurs utilisées.

Par exemple, la température seuil sera choisie égale à 10°C pour des cellules d'accumulateurs au lithium et égale à 0°C pour des cellules d'accumulateurs au plomb.

Dans les quatre modes de réalisation représentés sur les figures 1 à 7, le dispositif de réchauffement 100 ; 200 ; 300 ; 400 comprend un circuit d'extraction qui comporte un premier composant électronique 140; 240; 340, 341 ; 440 adapté à extraire une quantité d'énergie électrique de la batterie d'accumulateurs 10.

Selon une caractéristique particulièrement avantageuse de l'invention telle qu'elle est maintenant revendiquée, le dispositif de réchauffement 100 comprend en outre :
- un circuit de restitution qui est au moins en partie distinct dudit circuit d'extraction et qui comporte un second composant électronique 160 distinct ou confondu avec ledit premier composant électronique 140,
- des moyens de sélection 110, 111, 112, 114 pour connecter l'un ou l'autre des circuit d'extraction et circuit de restitution à la borne positive 12 de la batterie d'accumulateurs 10, et
- une unité de pilotage 115 des moyens de sélection 110, 111, 112, 114 ; adaptée à connecter le circuit d'extraction à ladite borne positive 12 de manière que ledit premier composant électronique extrait une quantité d'énergie électrique ΔQ1 de la batterie d'accumulateurs 10, puis le circuit de restitution à ladite borne de manière que ledit second composant électronique restitue à ladite batterie d'accumulateurs 10 une partie ΔQ2 de ladite quantité d'énergie électrique ΔQ1.

L'unité de pilotage est ici formée par un microprocesseur 115.

Lorsque ce microprocesseur 115 commande la connexion du circuit d'extraction à la borne positive 12 de la batterie d'accumulateurs 10, un premier courant électrique, dit courant électrique initial i1, circule dans le circuit d'extraction dans un premier sens de circulation (voir par exemple la figure 2).

Ce courant électrique initial i1 traverse alors la résistance interne 16 de la batterie d'accumulateurs 10, ce qui, par effet joule, réchauffe la batterie d'accumulateurs 10.

Le second composant électronique 160 est adapté à restituer à la batterie d'accumulateurs 10, via le circuit de restitution, une partie de ladite quantité d'énergie électrique extraite de la batterie d'accumulateurs 10 par le premier composant électronique 140.

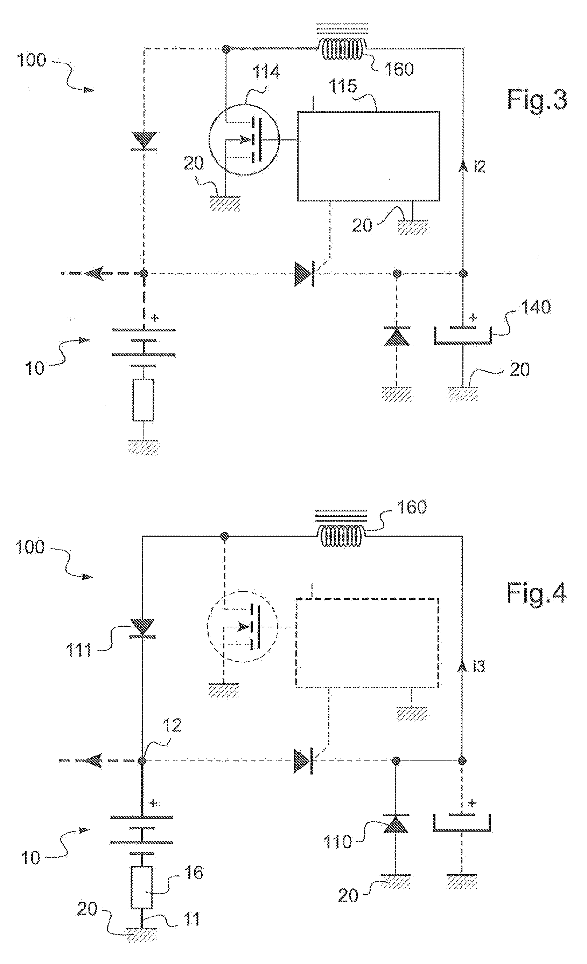

Ainsi, lorsque l'unité de pilotage 115 commande la connexion du circuit de restitution à la borne positive 12 de la batterie d'accumulateurs 10, un second courant électrique, dit courant électrique final i3, circule dans le circuit de restitution dans un second sens de circulation (voir par exemple la figure 4).

Les premier et second sens de circulation du courant sont inversés entre eux au niveau de la borne positive de la batterie d'accumulateurs 10.

Ce courant électrique final i3 traverse alors la résistance interne 16 de la batterie d'accumulateurs 10, ce qui, par effet joule, réchauffe à nouveau la batterie d'accumulateurs 10.

On observe ici que lorsque la batterie d'accumulateurs 10 se réchauffe, la valeur de la résistance interne 16 diminue et la tension aux bornes de la batterie d'accumulateurs 10 augmente pour se rapprocher progressivement de sa tension nominale.

Pour chaque circuit électrique représenté sur les figures 1 à 7, on considèrera que l'ensemble des masses 20 d'un même circuit électrique sont reliées entre elles.

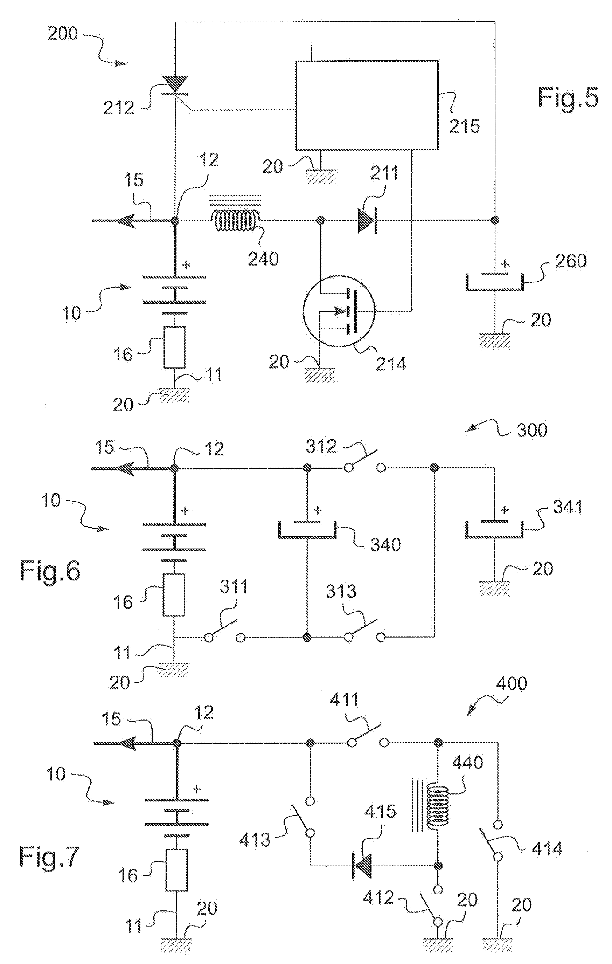

Dans les premier et deuxième modes de réalisation respectivement représentés sur la figure 1 et sur la figure 5, les premier 140 ; 240 et second 160 ; 260 composants électroniques du dispositif de réchauffement 100; 200 sont distincts,
- il est prévu un circuit intermédiaire qui intègre les premier 140 ; 240 et second 160 ; 260 composants électroniques,
- dans lequel les moyens de sélection 110, 111, 112, 114 ; 211, 212, 214 soient adaptés à fermer ou à ouvrir ledit circuit intermédiaire, et
- dans lequel l'unité de pilotage 115; 215 soit adaptée à fermer ledit circuit intermédiaire pour transférer une partie de la quantité d'énergie électrique ΔQ1 depuis le premier composant électronique 140; 240 jusqu'au second composant électronique 160 ; 260.

Dans le premier mode de réalisation du dispositif de réchauffement 100 représenté sur les figures 1 à 4, le premier composant électronique est un condensateur 140 et le second composant électronique est une bobine 160.

Sur la figure 2, on a représenté en traits pleins le circuit d'extraction et en traits pointillés le reste du circuit électrique.

Il est connecté, d'un côté, à la borne positive 12 de la batterie d'accumulateurs 10, et de l'autre, à la masse 20. Il comprend en série, depuis la borne positive 12 de la batterie d'accumulateurs 10 jusqu'à la masse 20, un thyristor 112 (qui appartient auxdits moyens de sélection), et le condensateur 140.

Le thyristor 112 a la fonction d'un interrupteur électronique commandé par le microprocesseur 115 via une gâchette 113.

Ce microprocesseur 115 est donc adapté à générer une impulsion électrique sur cette gâchette 113 de manière à ce que le thyristor 112 soit électriquement équivalent à un interrupteur fermé lorsque le courant circule depuis la borne positive 12 de la batterie d'accumulateurs 10 vers le condensateur 140, jusqu'à ce que le courant électrique initial i1 qui le traverse devienne nul.

Le circuit d'extraction est donc fermé après que le microprocesseur 115 a émis cette impulsion, tant que le courant initial i1 n'est pas nul. Le circuit d'extraction s'ouvre ensuite et reste ouvert tant qu'aucune autre impulsion n'est émise par le microprocesseur 115 sur la gâchette 113.

Sur la figure 3, on a représenté le circuit intermédiaire en traits pleins et en traits pointillés le reste du circuit électrique.

Ce circuit intermédiaire est un circuit série connecté à ses deux bornes à la masse 20. Il comprend successivement, le condensateur 140, la bobine 160 et un transistor 114.

Ainsi, le circuit intermédiaire forme un circuit LC parallèle.

Le transistor 114 a la fonction d'un interrupteur électronique. Sa source est connectée à la masse 20, son drain est connecté à une borne de la bobine 160, et sa grille est connectée au microprocesseur 115.

Ainsi, lorsque le microprocesseur 115 émet sur la grille du transistor 114 une tension seuil, le transistor 114 devient électriquement équivalent à un interrupteur fermé, si bien que le circuit intermédiaire est fermé. Au contraire, tant que la tension à la grille reste inférieure à la tension seuil, le circuit intermédiaire reste ouvert.

Ici, le transistor 114 est un transistor MOS (pour Métal Oxyde Semiconducteur).

Sur la figure 4, on a représenté le circuit de restitution en trait pleins et le reste du circuit électrique en traits pointillés.

Ce circuit de restitution est un circuit série dont une borne est connectée à la masse 20 et l'autre borne est connectée à la borne positive 12 de la batterie d'accumulateurs 10.

Il comprend successivement, depuis la masse 20 jusqu'à la borne positive 12 de la batterie d'accumulateurs 10, une première diode 110, la bobine 160 et une seconde diode 111.

La borne de la bobine 160 qui est connectée à la première diode 110 est celle qui est connectée au condensateur 140.

Ainsi, lorsque le microprocesseur 115 arrête d'émettre sur la grille du transistor 114 une tension seuil, et que le transistor 114 devient électriquement équivalent à un interrupteur ouvert, le circuit intermédiaire s'ouvre et le circuit de restitution se ferme. Au contraire, tant que le microprocesseur 115 émet sur la grille du transistor 114 une tension seuil, le circuit de restitution reste ouvert.

Les première et seconde diodes sont orientées de manière à ce qu'elles soient passantes lorsque le courant électrique final i3 circule depuis la bobine 160 vers la borne positive 12 de la batterie d'accumulateurs 10.

Le microprocesseur 115 comporte une mémoire morte dans laquelle sont mémorisées :
- les tensions de seuil respectives du thyristor 112 et du transistor 114,
- la température seuil de la batterie d'accumulateurs 10,
- la valeur de la capacité du condensateur 140 et/ou le temps de charge du condensateur 140 associée à la valeur de cette capacité, dit « temps de charge du condensateur 140 », et
- la valeur de l'inductance de la bobine 160 et/ou le temps de charge associée à cette valeur de l'inductance, dit « temps de charge de la bobine 160 ».

Le microprocesseur 115 est par ailleurs alimenté en courant par un dispositif à régulateur de tension issu de la batterie de démarrage (non-représentée). Il est, en outre connecté à une sonde de température, ce qui lui permet de détecter la température interne de la batterie d'accumulateurs 10 et de la comparer avec la température seuil enregistrée.

Le microprocesseur 115 comprend également une horloge interne (non représentée).

Ce microprocesseur 115 est adapté à piloter le thyristor 112 et le transistor 114 selon trois étapes, initiale, intermédiaire et finale.

Au début d'une première étape, dite étape initiale, le microprocesseur 115 émet une impulsion sur la gâchette 113 du thyristor 112 de manière à connecter le circuit d'extraction à la borne positive 12 de la batterie d'accumulateurs 10.

Cette étape initiale présente une durée Δt1, programmée pour être égale au temps de charge du condensateur 140.

Au cours de cette étape, le condensateur 140, qui est initialement déchargé, se charge par l'intermédiaire du courant électrique initial i1 circulant depuis la borne positive 12 de la batterie d'accumulateurs 10 vers le condensateur 140, dans le premier sens de circulation.

Ainsi, la tension aux bornes du condensateur 140 varie jusqu'à atteindre une tension nominale sensiblement égale à la tension aux bornes de la batterie d'accumulateurs 10.

Au cours de cette étape, le courant électrique initial i1 traverse également la résistance interne 16 de la batterie d'accumulateurs 10, qui par effet joule, réchauffe la batterie d'accumulateurs 10.

Ainsi, la température interne de la batterie d'accumulateurs 10 augmente et la valeur de la résistance interne 16 diminue.

A l'issue de cette étape, le condensateur 140 est chargé. Un équilibre électrique est donc atteint de sorte qu'aucun courant ne circule plus dans le circuit d'extraction. Le thyristor 112 devient alors électriquement équivalent à un interrupteur ouvert.

Simultanément, au début d'une étape intermédiaire, le microprocesseur 115 établit sur la grille du transistor 114 une tension égale à la tension seuil pour fermer le circuit intermédiaire.

Au cours de cette étape intermédiaire, le condensateur 140 se décharge et la bobine 160 est traversée par un courant intermédiaire i2 continu qui croît progressivement. Cette étape intermédiaire présente une durée Δt2 programmée pour être égale au temps de charge de la bobine 160.

Ce courant électrique intermédiaire i2, s'établit progressivement pour atteindre un courant maximal lorsque la bobine 160 est chargée. Ce courant maximal est fonction des caractéristiques de la bobine 160 et du transistor 114 (notamment du courant admissible par le transistor 114).

A l'issue de cette étape intermédiaire, le microprocesseur 115 arrête d'établir sur la grille du transistor 114 une tension égale à la tension seuil.

Ainsi, au cours d'une étape finale d'une durée Δt3 égale au temps de décharge de la bobine 160, un courant électrique final i3 décroit de manière continue pour atteindre en fin d'étape, une valeur nulle lorsque la bobine 160 est totalement déchargée.

Au cours de cette étape finale, le courant électrique final i3 circule depuis la bobine 160 jusqu'à la batterie d'accumulateurs 10, dans le second sens de circulation.

Le courant électrique final i3 traverse alors la résistance interne 16 de la batterie d'accumulateurs 10 qui, par effet joule, réchauffe la batterie d'accumulateurs 10.

Une fois cette étape achevée, le courant émis par la batterie d'accumulateurs 10 est bloqué par la seconde diode 111.

Avantageusement, la quantité d'énergie extraite ΔQ1 de la batterie d'accumulateurs 10 par le condensateur 140 via le circuit d'extraction, et la quantité d'énergie restituée ΔQ2 à la batterie d'accumulateurs 10 par la ou les décharges de la bobine 160 sont sensiblement identiques.

Ainsi, l'énergie de la batterie d'accumulateurs 10 est préservée pour le démarrage proprement dit du véhicule automobile.

Selon une caractéristique particulièrement avantageuse du procédé de pilotage conforme à l'invention, les étapes initiale, intermédiaire et finale sont répétées jusqu'à ce que la température de la batterie d'accumulateurs 10 atteigne une température déterminée ou que la valeur de la résistance interne 16 de la batterie d'accumulateurs 10 atteigne une valeur déterminée.

Avantageusement, cette température déterminée est ici égale à la température seuil ou encore à la température de fonctionnement optimal de la batterie d'accumulateurs 10.

En variante, on peut utiliser un condensateur et une bobine dont la capacité et l'inductance sont telles que les étapes intermédiaire et finale doivent être répétées successivement jusqu'à ce que le condensateur soit totalement déchargé.

Sur la figure 5, on a représenté un second mode de réalisation du dispositif de réchauffement 200 ne faisant pas partie de l'invention telle qu'elle est maintenant revendiquée, qui se distingue du premier mode de réalisation par le fait que le premier composant électrique est une bobine 240 et le second composant électrique est un condensateur 260.

Le circuit d'extraction du dispositif de réchauffement 200 comprend en série, depuis la borne positive 12 de la batterie d'accumulateurs 10 jusqu'à la masse 20, la bobine 240 et un transistor 214.

Le circuit d'extraction est donc fermé tant que le microprocesseur 215 établit une tension de seuil sur la grille du transistor 214. Le circuit d'extraction est sinon ouvert.

Le circuit intermédiaire comprend en série, depuis la borne positive 12 de la batterie d'accumulateurs 10 jusqu'à la masse 20, la bobine 240, une première diode 211 et le condensateur 260.

Lorsque le microprocesseur 115 arrête d'émettre sur la grille du transistor 214 une tension seuil, le circuit d'extraction s'ouvre et le circuit intermédiaire se ferme.

Le circuit intermédiaire forme alors un circuit LC série.

Ici, la première diode 211 est orientée de manière à ce qu'elle soit passante lorsque le courant électrique intermédiaire circule depuis la borne positive 12 de la batterie d'accumulateurs 10 vers le condensateur 260.

La borne de la bobine 240 initialement connectée au drain du transistor 214 est celle qui est ainsi connectée à une borne du condensateur 260.

Le circuit de restitution est un circuit série dont une borne est connectée à la masse 20 et dont l'autre borne est connectée à la borne positive 12 de la batterie d'accumulateurs 10.

Il comprend successivement, depuis la masse 20 jusqu'à la borne positive 12, le condensateur 260 et un thyristor 212.

Le circuit de restitution se ferme donc après que le microprocesseur 115 a émis une impulsion sur la gâchette du thyristor 212, tant que le courant final n'est pas nul.

Le microprocesseur 215 est adapté à piloter le transistor 214 et le thyristor 212 selon trois étapes initiale, intermédiaire et finale.

L'étape initiale présente une durée Δt1 programmée pour être égale au temps de charge de la bobine 240.

Au cours de cette étape, la bobine 260, initialement déchargée, se charge grâce au courant électrique initial circulant depuis la borne positive 12 de la batterie d'accumulateurs 10 vers la bobine 240 au travers du transistor 214, dans le premier sens de circulation.

Ainsi, la tension aux bornes de la bobine 240 varie jusqu'à atteindre une tension nominale sensiblement égale à la tension aux bornes de la batterie d'accumulateurs 10.

A l'issue de cette étape, la bobine 240 est chargée. Simultanément, le microprocesseur 115 arrête d'établir sur la grille du transistor 214 une tension égale à la tension seuil, pour ouvrir le circuit d'extraction et fermer le circuit intermédiaire.

Au cours de l'étape intermédiaire, la batterie d'accumulateurs 10 et la bobine 240 se déchargent pour charger le condensateur 260 via le circuit intermédiaire, jusqu'à une tension égale à la somme de la tension aux bornes de la batterie d'accumulateurs 10 et de la tension aux bornes de la bobine 240.

Cette étape intermédiaire présente une durée Δt2 programmée pour être égale au temps de décharge nominal de la bobine 240.

Les étapes initiale et intermédiaire sont répétées jusqu'à ce que le condensateur 260 soit totalement chargé.

Ainsi, lorsque le condensateur 260 est totalement chargé, la tension à ses bornes est supérieure à la tension aux bornes de la batterie d'accumulateurs 10.

Puis, au cours de l'étape finale, le microprocesseur 215 pilote le thyristor 212, via sa gâchette, pour connecter le circuit de restitution à la borne positive 12 de la batterie d'accumulateurs 10.

Au cours de cette étape finale, le condensateur 260 se décharge jusqu'à ce que la tension à ses bornes soit égale à la tension aux bornes de la batterie d'accumulateurs 10.

Cette étape finale présente donc une durée Δt3 programmée pour être égale au temps de décharge du condensateur 260 depuis sa tension nominale jusqu'à 12 Volts.

Ainsi, au cours des étapes initiale, intermédiaire et finale, les courants électriques initial, intermédiaire et final traversent la résistance interne 16 de la batterie d'accumulateurs 10, qui par effet joule, réchauffent la batterie d'accumulateurs 10 en continu.

Sur les figures 6 et 7, on a représenté les troisième et quatrième modes de réalisation du dispositif de réchauffement ne faisant pas partie de l'invention telle qu'elle est maintenant revendiquée, qui se distinguent des premier et deuxième modes de réalisation par le fait que les premier et second composants électroniques sont confondus.

Dans le troisième mode de réalisation de l'invention représenté sur la figure 6, les premier et second composants électroniques sont constitués d'un ensemble d'au moins deux condensateurs 340, 341, adaptés à être connectés en parallèle avec la batterie d'accumulateurs 10 par le circuit d'extraction et à être connectés en série avec la batterie d'accumulateurs 10 par le circuit de restitution.

Un premier condensateur 340 présente à cet effet une borne positive connectée directement à la borne positive 12 de la batterie d'accumulateurs 10, et une borne négative connectée à la masse 20 via un premier interrupteur 311 commandé par l'unité de pilotage.

Un second condensateur 341 présente quant à lui une borne négative connectée à la masse 20 et une borne positive qui est connectée, d'une part, à la borne positive du premier condensateur 340 via un second interrupteur 312 commandé par l'unité de pilotage, et, d'autre part, à la borne négative du premier condensateur 340 via un troisième interrupteur 313 commandé par l'unité de pilotage.

Le circuit d'extraction est alors fermé lorsque les premier et second interrupteurs électriques 311, 312 sont fermés et que le troisième interrupteur électrique 313 est ouvert.

Le circuit de restitution est alors fermé lorsque les premier et second interrupteurs électriques 311, 312 sont ouverts et que le troisième interrupteur électrique 313 est fermé.

Le procédé de réchauffement de la batterie d'accumulateurs 10 s'effectue ici en deux étapes initiale et finale.

Au cours de l'étape initiale, l'unité de pilotage pilote la fermeture des premier et deuxième interrupteurs électriques 311, 312 pour connecter le circuit d'extraction à la borne positive 12 de la batterie d'accumulateurs 10.

Les premier et second condensateurs 340, 341 comportent ici une même valeur de capacité.

A l'issue de cette étape initiale, chacun des premier et second condensateurs 340, 341 est chargé à une tension égale à la tension aux bornes de la batterie d'accumulateurs 10.

Cette étape initiale présente une durée Δt1 programmée pour être égale au temps de charge des condensateurs 340, 341.

Une fois les condensateurs 340, 341 chargés, le microprocesseur pilote l'ouverture des premier et deuxième interrupteurs électriques 311, 312 et la fermeture du troisième interrupteur électrique 313, pour connecter les condensateurs 340, 341 en série avec la batterie d'accumulateurs 10, via le circuit de restitution.

Au cours de cette étape finale, chacun des premier et second condensateurs 340, 341 est déchargé jusqu'à atteindre un équilibre électrique dans lequel la tension aux bornes des condensateurs 340, 341 est égale à la moitié de la tension aux bornes de la batterie d'accumulateurs 10.

Cette étape finale présente une durée Δt3 programmée pour être égale au temps de décharge des condensateurs 340, 341 depuis leur tension nominale jusqu'à 6 Volts.

Ainsi, au cours des étapes initiale et finale, les courants électriques initial et final traversent la résistance interne 16 de la batterie d'accumulateurs 10 qui, par effet joule, réchauffent la batterie d'accumulateurs 10 en continu.

Selon une caractéristique particulièrement avantageuse de l'invention, les étapes initiale et finale sont répétées jusqu'à ce que la température de la batterie d'accumulateurs 10 atteigne une température déterminée.

Lorsque la batterie d'accumulateurs 10 a atteint cette température déterminée, les trois interrupteurs électriques 311, 312, 313 sont pilotés à l'état ouvert.

Les interrupteurs 311, 312, 313 peuvent être réalisés de diverses manières. Avantageusement, les interrupteurs 311, 312, 313 sont réalisés au moyen de thyristors rendus passant respectivement, de la borne négative du condensateur 340 vers la masse 20, de la borne 12 vers le condensateur 341, et de la borne positive du condensateur 341 vers la borne négative du condensateur 340 lorsque leurs gâchettes reçoivent successivement une impulsion pour les fermer. L'ouverture se produit alors naturellement par l'annulation du courant qui correspond au meilleur instant d'ouverture indépendamment des dérives possibles de température ou de vieillissement.

Sur la figure 7, on a représenté le quatrième mode de réalisation du dispositif de réchauffement 400 ne faisant pas partie de l'invention telle qu'elle est maintenant revendiquée, qui se distingue du troisième mode de réalisation par le fait que les premier et second composants électroniques sont constitués par une bobine 440.

Dans ce mode de réalisation, l'unité de pilotage est programmée pour fermer et ouvrir successivement le circuit d'extraction et le circuit de restitution, afin de connecter successivement la borne positive 12 de la batterie d'accumulateurs 10 à l'une et l'autre des bornes de la bobine 440.

Le circuit d'extraction comprend alors en série, depuis la borne positive 12 de la batterie d'accumulateurs 10 jusqu'à la masse 20, un premier interrupteur électrique 411 commandé par l'unité de pilotage, la bobine 440, et un deuxième interrupteur électrique 412 commandé par l'unité de pilotage.

Le circuit de restitution comprend quant à lui en série, depuis la borne positive 12 de la batterie d'accumulateurs 10 jusqu'à la masse 20, un troisième interrupteur électrique 413 commandé par l'unité de pilotage, une diode 415, la bobine 440, et un quatrième interrupteur électrique 414 commandé par l'unité de pilotage.

Cette diode 415 est orientée de manière à ce qu'elle soit passante lorsque le courant électrique final circule depuis la bobine 440 vers la borne positive 12 de la batterie d'accumulateurs 10.

La borne de la bobine 440 connectée du côté du premier interrupteur électrique 411 est celle qui est connectée du côté du quatrième interrupteur électrique 414.

Ici encore, le procédé de réchauffement de la batterie d'accumulateurs 10 est mis en oeuvre en deux étapes initiale et finale.

Au début de l'étape initiale, l'unité de pilotage pilote la fermeture des premier et deuxième interrupteurs électriques 411, 412 pour connecter le circuit d'extraction à la borne positive 12 de la batterie d'accumulateurs 10.

A l'issue de cette étape initiale, la bobine 440 est chargée à une tension égale à la tension aux bornes de la batterie d'accumulateurs 10.

Une fois la bobine 440 chargée, au cours d'une étape finale, l'unité de pilotage pilote la fermeture de l'interrupteur 413 puis l'ouverture des premier et deuxième interrupteurs électriques 411, 412 et la fermeture du quatrième interrupteur électrique, 414 pour connecter le circuit de restitution à la borne positive 12 de la batterie d'accumulateurs 10.

Au cours de cette étape finale, la bobine 440 se décharge jusqu'à une tension nulle à ses bornes.

Avantageusement, les étapes initiale et finale sont réitérées jusqu'à ce que la température de la batterie d'accumulateurs 10 atteigne une température déterminée.

Une fois cette température atteinte, les quatre interrupteurs électriques 411, 412, 413, 414 sont ouverts par l'unité de pilotage.

Les interrupteurs 411, 412, 413 et 414 peuvent ici encore être réalisés de diverses manières. Avantageusement, les interrupteurs 411, 413, 414 sont réalisés au moyen de thyristors rendus passant respectivement, de la borne 12 vers l'entrée de la bobine 440, de la sortie de la bobine 440 vers la borne 12, et de la masse 20 vers l'entrée de la bobine 440 lorsque leurs gâchettes reçoivent successivement une impulsion pour les fermer. L'ouverture se produit alors ici encore naturellement par l'annulation du courant qui correspond au meilleur instant d'ouverture indépendamment des dérives possibles de température ou de vieillissement. La diode 415 peut alors être supprimée, sa fonction étant remplie par le thyristor de l'interrupteur 413. Une variante possible consiste à garder la diode 415 et à court-circuiter ou supprimer l'interrupteur 413. L'interrupteur 412, quant à lui, doit pouvoir s'ouvrir à courant non nul pour décharger la bobine vers la batterie.

A l'inverse, selon une variante de réalisation du quatrième mode de réalisation du dispositif de réchauffement représenté sur la figure 7, le circuit de d'extraction pourrait comprendre en série le troisième interrupteur électrique 413, une diode passante dans le sens inverse de celle de la diode 415, la bobine 440, et le quatrième interrupteur électrique 414, tandis que le circuit de restitution comprendrait en série le premier interrupteur électrique 411, la bobine 440, et le deuxième interrupteur électrique 412.

La présente invention n'est pas limitée aux modes de réalisation décrits et représentés, mais est définie par les revendications.

On pourrait notamment prévoir des moyens de sélection différents du thyristor, du transistor, ou des interrupteurs électriques précités, tels qu'un ensemble de portes logiques « ET » et « OU » permettant d'implémenter des équations logiques correspondant à la fonction réalisée par ces moyens de sélection.

On pourrait également envisager d'utiliser un dispositif de réchauffement tel que précité pour tout autre type de batterie d'accumulateurs, tel qu'une batterie d'accumulateurs destinée à un dispositif portatif, par exemple, un téléphone portable, ou un ordinateur portable (...), ou destinée à un véhicule électrique.

## Revendications

1. Dispositif de réchauffement (100) d'une batterie d'accumulateurs (10), comportant :
- un circuit d'extraction qui comporte un premier composant électronique (140),
- un circuit de restitution qui est au moins en partie distinct dudit circuit d'extraction et qui comporte un second composant électronique (160),
- des moyens de sélection (110, 111, 112, 114) pour connecter l'un ou l'autre des circuits d'extraction et de restitution à une même borne de la batterie d'accumulateurs (10), et
- une unité de pilotage (115) des moyens de sélection (110, 111, 112, 114) adaptés à connecter le circuit d'extraction à ladite borne de manière que ledit premier composant électronique (140) extrait une quantité d'énergie électrique de la batterie d'accumulateurs (10), puis le circuit de restitution à ladite borne de manière que ledit second composant électronique (160) restitue à ladite batterie d'accumulateurs (10) une partie de ladite quantité d'énergie électrique, **caractérisé en ce que** ledit premier composant électronique est un condensateur et ledit deuxième composant électronique est une bobine.

2. Dispositif de réchauffement (100) selon la revendication 1, dans lequel
- il est prévu un circuit intermédiaire qui comporte lesdits premier (140) et second (160) composants électroniques,
- dans lequel les moyens de sélection (110, 111, 112, 114) sont adaptés à fermer ou à ouvrir ledit circuit intermédiaire, et
- dans lequel ladite unité de pilotage (115) est adaptée à fermer ledit circuit intermédiaire pour transférer une partie de ladite quantité d'énergie électrique depuis le premier composant électronique (140) jusqu'au second composant électronique (160).

3. Dispositif de réchauffement (100) selon la revendication 2, dans lequel le circuit intermédiaire forme un circuit LC parallèle.

4. Dispositif de réchauffement (100) selon l'une des revendications précédentes, **caractérisé en ce que** les moyens de sélection comprennent au moins un thyristor (112).

5. Véhicule automobile comportant une batterie d'accumulateurs (10), **caractérisé en ce qu'**il comporte un dispositif de réchauffement (100) selon l'une quelconques des revendications 1 à 4, dont les circuits d'extraction et de restitution sont adaptés à être connectés à une même borne de la batterie d'accumulateurs (10) par les moyens de sélection (110, 111, 112, 114).

6. Procédé de pilotage des moyens de sélection (110, 111, 112, 114) d'un dispositif de réchauffement (100) selon l'une quelconques des revendications 1 à 4, comportant une étape initiale de connexion du circuit d'extraction à la borne de la batterie d'accumulateurs (10), puis une étape finale de connexion du circuit de restitution à ladite borne.

7. Procédé de pilotage selon la revendication 6, dans lequel les étapes initiale et finale sont répétées jusqu'à ce que la température de la batterie d'accumulateurs (10) atteigne une température déterminée.

8. Procédé de pilotage selon l'une des revendications 6 et 7 d'un dispositif de réchauffement (100) selon l'une des revendications 2 à 4, dans lequel il est prévu, entre lesdites étapes initiale et finale, une étape intermédiaire au cours de laquelle ledit circuit intermédiaire est fermé.

## Patentansprüche

1. Vorrichtung (100) zum Erwärmen einer Speicherbatterie (10), umfassend:
- eine Extraktionsschaltung, die eine erste elektronische Komponente (140) umfasst,
- eine Restitutionsschaltung, die mindestens teilweise von der Extraktionsschaltung verschieden ist und die eine zweite elektronische Komponente (160) umfasst,
- Auswahlmittel (110, 111, 112, 114) zum Verbinden einer von der Extraktions- und Restitutionsschaltung mit derselben Klemme der Speicherbatterie (10), und
- eine Steuereinheit (115) der Auswahlmittel (110, 111, 112, 114), die ausgelegt sind, die Extraktionsschaltung mit der Klemme derart zu verbinden, dass die erste elektronische Komponente (140) eine Menge an elektrischer Energie aus der Speicherbatterie (10) entnimmt, und dann die Restitutionsschaltung mit der Klemme derart zu verbinden, dass die zweite elektronische Komponente (160) einen Teil der Menge an elektrischer Energie in der Speicherbatterie (10) wiederherstellt,
**dadurch gekennzeichnet, dass** die erste elektronische Komponente ein Kondensator ist, und die zweite elektronische Komponente eine Spule ist.

2. Vorrichtung (100) zum Erwärmen nach Anspruch 1,
- wobei eine Zwischenschaltung vorgesehen ist, welche die erste (140) und zweite (160) elektronische Komponente umfasst,
- wobei die Auswahlmittel (110, 111, 112, 114) ausgelegt sind, die Zwischenschaltung zu schließen oder zu öffnen, und
- wobei die Steuereinheit (115) ausgelegt ist, die Zwischenschaltung zu schließen, um einen Teil der Menge an elektrischer Energie von der ersten elektronischen Komponente (140) zu der zweiten elektronischen Komponente (160) zu transferieren.

3. Vorrichtung (100) zum Erwärmen nach Anspruch 2,
wobei die Zwischenschaltung eine parallele LC-Schaltung bildet.

4. Vorrichtung (100) zum Erwärmen nach einem der vorhergehenden Ansprüche,
**dadurch gekennzeichnet, dass** die Auswahlmittel mindestens einen Thyristor (112) umfassen.

5. Automobilfahrzeug, welches eine Speicherbatterie (10) umfasst,
**dadurch gekennzeichnet, dass** dieses eine Vorrichtung (100) zum Erwärmen nach einem der Ansprüche 1 bis 4 umfasst, deren Extraktions- und Restitutionsschaltung ausgelegt sind, mit derselben Klemme der Speicherbatterie (10) durch die Auswahlmittel (110, 111, 112, 114) verbunden zu werden.

6. Verfahren zum Steuern von Auswahlmitteln (110, 111, 112, 114) einer Vorrichtung (100) zum Erwärmen nach einem der Ansprüche 1 bis 4, umfassend einen Anfangsschritt des Verbindens der Extraktionsschaltung mit der Klemme der Speicherbatterie (10), und dann einen Endschritt des Verbindens der Restitutionsschaltung mit der Klemme.

7. Steuerverfahren nach Anspruch 6,
wobei der Anfangs- und Endschritt wiederholt werden, bis die Temperatur der Speicherbatterie (10) eine bestimmte Temperatur erreicht.

8. Verfahren nach einem der Ansprüche 6 und 7 zum Steuern einer Vorrichtung (100) zum Erwärmen nach einem der Ansprüche 2 bis 4,
wobei zwischen dem Anfangs- und Endschritt ein Zwischenschritt vorgesehen ist, in dem die Zwischenschaltung geschlossen wird.

## Claims

1. Device for heating (100) a storage battery (10), comprising:
- an extraction circuit which comprises a first electronic component (140),
- a restoration circuit which is at least partly distinct from said extraction circuit and which comprises a second electronic component (160),
- selection means (110, 111, 112, 114) for connecting one or other of the extraction and restoration circuits to a same terminal of the storage battery (10), and
- a driver unit (115) for the selection means (110, 111, 112, 114) suitable for connecting the extraction circuit to said terminal in such a way that said first electronic component (140) extracts a quantity of electrical energy from the storage battery (10), then the restoration circuit to said terminal in such a way that said second electronic component (160) restores to said storage battery (10) a part of said quantity of electrical energy,
**characterized in that** said first electronic component is a capacitor and said second electronic component is a coil.

2. Heating device (100) according to Claim 1, in which an intermediate circuit is provided which comprises said first (140) and second (160) electronic components,
- in which the selection means (110, 111, 112, 114) are suitable for closing or opening said intermediate circuit, and
- in which said driver unit (115) is suitable for closing said intermediate circuit to transfer a part of said quantity of electrical energy from the first electronic component (140) to the second electronic component (160).

3. Heating device (100) according to Claim 2, in which the intermediate circuit forms a parallel LC circuit.

4. Heating device (100) according to one of the preceding claims, **characterized in that** the selection means comprise at least one thyristor (112).

5. Motor vehicle comprising a storage battery (10), **characterized in that** it comprises a heating device (100) according to any one of Claims 1 to 4, of which the extraction and restoration circuits are suitable for being connected to a same terminal of the storage battery (10) by the selection means (110, 111, 112, 114).

6. Method for driving the selection means (110, 111, 112, 114) of a heating device (100) according to any one of Claims 1 to 4, comprising an initial step of connection of the extraction circuit to the terminal of the storage battery (10), then a final step of connection of the restoration circuit to said terminal.

7. Driving method according to Claim 6, in which the initial and final steps are repeated until the temperature of the storage battery (10) reaches a determined temperature.

8. Driving method according to one of Claims 6 and 7 of a heating device (100) according to one of Claims 2 to 4, in which there is provided, between said initial and final steps, an intermediate step during which said intermediate circuit is closed.
